# EUROPÄISCHE PATENTANMELDUNG

(11) **EP 3 292 928 A1**
(43) Veröffentlichungstag der Anmeldung: **14.03.2018**
(21) Anmeldenummer: 16187806.1
(22) Anmeldetag: 08.09.2016
(51) Int. Cl.: B22F 3/105, B22F 5/00, B22F 5/04, B22F 7/08, F01D 5/14

(54) **VERFAHREN ZUR HERSTELLUNG EINER TURBINENSCHAUFEL**

(71) Anmelder: Siemens Aktiengesellschaft, 80333 München (DE)
(72) Erfinder: Brußk, Stefan, 45479 Mülheim an der Ruhr (DE); Ceranski, Oliver, 45479 Mülheim (DE); Cordova, Mauricio, 45130 Essen (DE); David, Walter, 45481 Mülheim an der Ruhr (DE); Fabek, Pascal, 45473 Mülheim an der Ruhr (DE); Legenbauer, Markus, 45279 Essen (DE); Rubbert, Ingo, 45481 Mülheim an der Ruhr (DE); Stiehm, Andreas, 53424 Remagen-Kripp (DE); Teuber, Hannes, 45468 Mülheim (DE); Vozelj, Dennis, 45131 Essen (DE); Ziwes, Ralf, 46539 Dinslaken (DE)

(57) **Zusammenfassung**

Die Erfindung betrifft ein Verfahren zur Herstellung einer Schaufel (1) für eine Strömungsmaschine, wobei in einem ersten Schritt das Schaufelblatt (2) konventionell gefertigt wird und in einem nächsten Schritt der Schaufelfuß (3) und ggf. die Deckplatte (4) durch die Selective Laser Melting-Technologie aufgebracht wird.

## Beschreibung

Die Erfindung betrifft ein Verfahren zur Herstellung einer Schaufel für eine Strömungsmaschine, wobei in einem ersten Schritt ein Schaufelblatt hergestellt wird.

Desweiteren betrifft die Erfindung eine Turbinenschaufel.

Turbinenschaufeln als Ausführungsform einer Komponente für eine Strömungsmaschine werden beispielsweise in Dampfturbinen eingesetzt. Die Turbinenschaufeln sind in einer Längsrichtung ausgebildet und weisen ein profiliertes Schaufelblatt und einen am Schaufelblatt materialeinheitlich ausgebildeten Schaufelfuß auf. Der Schaufelfuß muss durch eine geeignete geometrische Form in dem Rotor verankert werden. Speziell bei Turbinenschaufeln, die auf Rotoren befestigt sind, muss diese Verankerung die im Betrieb auftretende Fliehkraft der Turbinenschaufel tragen. Es sind Bauformen von Schaufelfüßen bekannt, die erheblich zur Gesamtmasse der Turbinenschaufel beitragen und damit die Tragfähigkeit des Rotors ausnutzen, ohne der aerodynamischen Aufgabe im Betrieb zugute zu kommen.

Die Turbinenschaufeln werden üblicherweise aus einem Stabmaterial aus dem Vollen gefräst. Bei gegebenem Turbinenschaufelfußquerschnitt ergibt sich eine feste Relation zwischen den Flieh- und Strömungskräften. Die Turbinenschaufelfußgröße und geometrische Form ist in der Regel durch eine Tragfähigkeit der Welle eingeschränkt. Abhilfe schafft hier ein Wechsel zu sehr hochwertigen Schaufelmaterialien. Solche hochwertigen Materialien sind allerdings vergleichsweise teuer.

Die im Betrieb auf die Laufschaufeln einer Strömungsmaschine wirkende Fliehkraft erfordert eine stabile und zum Teil daraus resultierende komplexe Ausführung des Schaufelfußes sowie der Nuten im Rotor.

Desweiteren wirkt die große Masse der Schaufelfüße und Deckplatten limitierend auf die Auslegung und Größe der Beschaufelung insgesamt.

Für die in der Regel integral gefertigte Schaufel inklusive Schaufelfuß und Deckplatte ist der höchstbeanspruchte Komponententeil bestimmend für die Werkstoffauswahl. In Kombination mit dem großen Massenbedarf, führt dies zu einem vergleichsweise hohen Verbrauch an Rohmaterial sowie zu einem hohen Bearbeitungsaufwand.

Die Erfindung möchte hier Abhilfe schaffen.

Aufgabe der Erfindung ist es, eine kostengünstigere Schaufel anzubieten.

Gelöst wird diese Aufgabe durch ein Verfahren zur Herstellung einer Schaufel für eine Strömungsmaschine, wobei in einem ersten Schritt ein Schaufelblatt hergestellt wird, wobei ein Schaufelfuß an das Schaufelblatt angeordnet wird, das dadurch entsteht, indem ein Werkstoff in Pulverform auf das Schaufelblatt angeordnet und mittels einer Energiestrahlung lokal umgeschmolzen wird und nach Erstarrung eine feste Materialschicht bildet, wobei eine weitere Schicht des Werkstoffs in Pulverform auf die feste Materialschicht aufgebracht und mittels der Energiestrahlung lokal umgeschmolzen wird und nach Erstarrung eine weitere feste Materialschicht bildet.

Desweiteren wird die Aufgabe gelöst durch eine Turbinenschaufel, die durch das erfindungsgemäße Verfahren hergestellt wird.

Mit der Erfindung wird somit vorgeschlagen, die funktionalen Bauteile einer Schaufel, nämlich das Schaufelblatt, den Schaufelfuß und die Deckplatte funktional zu trennen. Zunächst wird ein Schaufelblatt hergestellt. Dieses Schaufelblatt ist profiliert und wird gemäß herkömmlichen bzw. konventionellen Methoden gefertigt, z. B. gezogen. Dieses Schaufelblatt kann aus einem Material ausgebildet sein. An dieses Schaufelblatt wird mittels Selective Laser Melting (SLM) der Schaufelfuß und die Deckblatte angefügt. Das Material des Schaufelfußes und der Deckplatte kann aus einem anderen Material als das Material des Schaufelblattes bestehen.

Der Vorteil der durch die Selective Laser Melting-Technologie gefertigte Schaufelfuß und/oder Deckplatte ist, dass die Möglichkeit der unterschiedlichen Werkstoffauswahl besteht. Desweiteren können Hohlräume in der Schaufel und in der Deckplatte ausgebildet werden.

Desweiteren ist eine geometrienahe Fertigung mit wenig Verschnitt und Nachbearbeitungsaufwand möglich, was zu einer Kostenersparnis bei der Herstellung der Schaufeln führt.

Daneben sind weitere neue Gestaltungsmöglichkeiten, wie Hinterschneidungen oder Gitterstrukturen oder Hohlräume möglich.

Ein weiterer Vorteil ist, dass bei ähnlichen Geometriestabilitäten zu herkömmlichen Schaufeln weniger Masse eingesetzt werden kann.

Ein weiterer Vorteil ist, dass die Werkstoffwahl für den Schaufelfuß und die Deckplatte gezielt ausgewählt werden kann.

In den Unteransprüchen sind vorteilhafte Weiterbildungen angegeben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

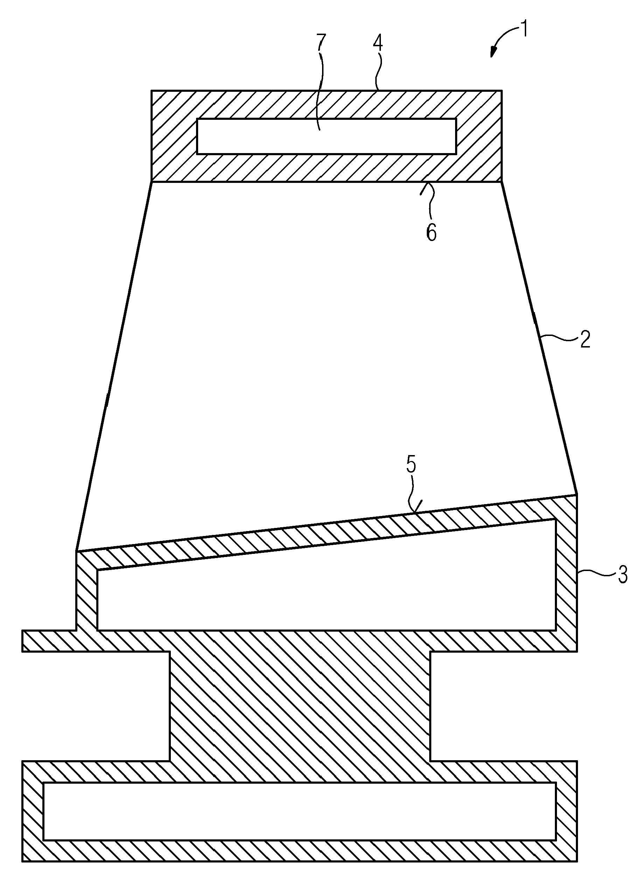

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Gleiche Bauteile oder Bauteile mit gleicher Funktion sind dabei mit gleichen Bezugszeichen gekennzeichnet.

Im Hinblick auf Ergänzungen der in der Zeichnung unmittelbar erkennbaren Lehren, wird auf den einschlägigen Stand der Technik verwiesen.

Es zeigt:
- die Figur: eine schematische Darstellung einer erfindungsgemäßen Schaufel.

Die Figur zeigt eine schematische Darstellung einer Schaufel 1. Die Schaufel 1 ist beispielsweise eine Turbinenschaufel oder eine Verdichterschaufel.

Die Schaufel 1 ist für eine Strömungsmaschine, wie beispielsweise eine Dampfturbine, eine Gasturbine oder einen Verdichter ausgebildet.

In einem ersten Schritt wird das Schaufelblatt 2 hergestellt. Das Schaufelblatt 2 ist profiliert ausgebildet und gemäß konventionellen Methoden gefertigt, z. B. gezogen. In einem nächsten Schritt wird durch die Selective Laser Melting-Technologie ein Schaufelfuß 3 und eine Deckplatte 4 an das Schaufelblatt 2 angeordnet. Das Schaufelblatt 2 weist ein unteres Ende 5 auf, an dem der Schaufelfuß 3 ausgebildet wird. Desweiteren weist das Schaufelblatt 2 ein oberes Ende 6 auf, an dem die Deckplatte 4 angeordnet wird.

Der Schaufelfuß 3 wird folgendermaßen ausgebildet. Ein Werkstoff wird in Pulverform aus das untere Ende 5 des Schaufelblatts angeordnet und mittels einer Energiestrahlung (nicht näher dargestellt) lokal umgeschmolzen, wobei nach Erstarrung eine feste Materialschicht gebildet wird. Nach diesem Schritt wird eine weitere Schicht des Werkstoffs in Pulverform auf die feste Materialschicht aufgebracht und mittels der Energiestrahlung lokal umgeschmolzen, wobei nach Erstarrung eine weitere feste Materialschicht gebildet wird.

In einer alternativen Ausführungsform können die Materialschichten aus unterschiedlichen Werkstoffen ausgebildet sein.

Die Deckplatte 4 wird nach folgendem Verfahren ausgebildet. In einem ersten Schritt wird ein Werkstoff in Pulverform auf das obere Ende 6 des Schaufelblatts angeordnet und mittels einer Energiestrahlung lokal umgeschmolzen, wobei nach Erstarrung eine feste Materialschicht gebildet ist. In einem nächsten Schritt wird eine weitere Schicht des Werkstoffs in Pulverform auf die feste Materialschicht aufgebracht und mittels der Energiestrahlung lokal umgeschmolzen, wobei nach Erstarrung eine weitere feste Materialschicht gebildet wird.

In alternativen Ausführungsformen können die Materialschichten aus unterschiedlichen Werkstoffen bestehen.

In der in gemäß der Figur dargestellter Ausführungsform ist die Deckplatte 4 derart geformt, dass diese einen Hohlraum 7 umfasst.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung einer Schaufel (1) für eine Strömungsmaschine,
wobei in einem ersten Schritt
ein Schaufelblatt (2) hergestellt wird,
**dadurch gekennzeichnet, dass**
ein Schaufelfuß (3) an das Schaufelblatt (2) angeordnet wird, das dadurch entsteht, indem ein Werkstoff in Pulverform auf das Schaufelblatt (2) angeordnet und mittels einer Energiestrahlung lokal umgeschmolzen wird und nach Erstarrung eine feste Materialschicht bildet, wobei eine weitere Schicht des Werkstoffs in Pulverform auf die feste Materialschicht aufgebracht und mittels der Energiestrahlung lokal umgeschmolzen wird und nach Erstarrung eine weitere feste Materialschicht bildet.

2. Verfahren nach Anspruch 1,
wobei eine Deckplatte (4) an das Schaufelblatt (2) angeordnet wird,
das dadurch entsteht, indem ein Werkstoff in Pulverform auf das Schaufelblatt (2) angeordnet und mittels einer Energiestrahlung lokal umgeschmolzen wird und nach Erstarrung eine feste Materialschicht bildet,
wobei eine weitere Schicht des Werkstoffs in Pulverform auf die feste Materialschicht aufgebracht und mittels der Energiestrahlung lokal umgeschmolzen wird und nach Erstarrung eine weitere feste Materialschicht bildet.

3. Verfahren nach Anspruch 2,
wobei der Werkstoff an der Deckplatte (4) derart angeordnet wird,
dass ein Hohlraum (7) entsteht.

4. Verfahren nach Anspruch 1, 2 oder 3,
wobei die Schaufel (1) als Turbinenschaufel für eine Strömungsmaschine,
insbesondere Dampfturbine ausgebildet wird.

5. Turbinenschaufel,
hergestellt durch ein Verfahren nach einem der Ansprüche 1 bis 4.
